# EUROPEAN PATENT APPLICATION

(11) **EP 2 209 081 A1**
(43) Date of publication of application: **21.07.2010**
(21) Application number: 09154728.1
(22) Date of filing: 10.03.2009
(51) Int. Cl.: G06Q 10/00, G06Q 99/00

(54) **Digital lifetime record and display system**

(30) Priority: 09.01.2009 TW 98100779
(71) Applicant: Chung-Hsin Electric and Machinery Manufacturing Corp., Taoyuan Hsien (TW)
(72) Inventor: Lu, Yi-Chuan, Taoyuan Hsien (TW); Wu, Chi-Bin, Taoyuan Hsien (TW)
(74) Representative: Viering, Jentschura & Partner

(57) **Abstract**

A digital lifetime record and display system is provided. The digital lifetime record and display system includes a data input module, a database and a lifetime display module. Time and corresponding image related data are inputted through the data input module and respectively saved as the time related data and image paths in the database. Additionally, the lifetime display module has a timeline unit which displays time points corresponding to the time related data and a time display unit and an image display unit which both correspond to the time points. Thus, the lifetime display module can display time related data and a representative image which is one of the corresponding image related data. The digital lifetime record and display system can build up a personal image timeline for memorizing or sharing.

## Description

### BACKGROUND OF THE INVENTION

**1. Technical Field**

The present invention relates to digital lifetime record and display systems, and more particularly, to a digital lifetime record and display system for recording and displaying images captured at every moment in a lifetime according to chronology of events.

**2. Description of Related Art**

Since their advent several years ago, digital cameras have been improved greatly in quality and popularity. This, coupled with cell phone manufacturing giants' introduction of cell phones with camera, enables almost everyone to own a camera and take pictures of oneself whenever and wherever needed.

With online photo albums burgeoning, everyone can create an online photo album to post one's photos and view photos posted by others, thereby sharing one's personal life experience with others by photos. However, the existing operating interfaces for online photo albums are too complicated to allure users, and thus users of online photo albums are presently limited to some age groups rather than people of all ages.

Existing online photo albums are sorted by date of creation of albums or title of albums rather than chronology of images or chronology of events. Hence, existing online photo albums are unfit for groups whose albums consist of photos sorted by year, such as school clubs, league clubs, or alumni associations.

Owing to a lack of chronological sort option, existing online photo albums are inconvenient to manage, and are not personalized because they display a user's lifetime photos in a discrete manner instead of lifetime experience completely and orderly.

### BRIEF SUMMARY OF THE INVENTION

The present invention relates to a digital lifetime record and display system whereby images or events are recorded chronologically and displayed along a timeline so as for a user to record and view the user's experience of a lifetime according to age.

The present invention relates to a digital lifetime record and display system whereby images are displayed along a timeline such that organizations and groups can use the system to record activity-related images chronologically by following a simple operating procedure.

The present invention relates to a digital lifetime record and display system that allures users and applies to users of all ages with an easy-to-operate and highly interactive lifetime display module.

To achieve the above and other objectives, the present invention provides a digital lifetime record and display system, which comprises a data input module comprising at least a time input unit for inputting at least a time related datum, and an image input unit for inputting at least an image related datum corresponding to the time related datum; a database comprising at least a time related datum field for storing the time related datum and an image path related datum field for storing the at least an image path related datum corresponding in storage position to the image related datum; and a lifetime display module comprising a timeline display unit for displaying at least a time point in accordance with the time related datum, at least an image display unit for matching the time point and displaying a representative image related datum corresponding to the time point, and at least a time display unit for matching the time point and displaying the time related datum corresponding to the time point.

The present invention can be implemented to achieve an inventive step and at least the following effect:

1. Image related data are displayed chronologically such that the process of a user's lifetime can be displayed and recollected completely and clearly and therefore in a personalized manner.

2. A lifetime display module is easy to operate and highly interactive so as to allure users and apply to users of all ages.

The present invention is herein illustrated with specific embodiments, so that one skilled in the pertinent art can easily understand other advantages and effects of the present invention by reference to the disclosure contained in the specification, the claims, and the drawings.

### BRIEF DESCRIPTION OF THE SEVERAL VIEWS OF THE DRAWINGS

The invention as well as a preferred mode of use, further objectives and advantages thereof will be best understood by referring to the following detailed description of an illustrative embodiment in conjunction with the accompanying drawings, wherein:

FIG. 1A is the first block diagram of a digital lifetime record and display system of the present invention;

FIG. 1B is the second block diagram of the digital lifetime record and display system of the present invention;

FIG. 2 is a block diagram of a data input module of the present invention;

FIG. 3 is a schematic view of application of the data input module according to the present invention;

FIG. 4A is a schematic view of a database of the present invention;

FIG. 4B is a schematic view of the database of the present invention;

FIG. 5A is a schematic view of application of a lifetime display module according to the present invention;

FIG. 5B is a schematic view of application of the lifetime display module according to the present invention;

FIG. 5C is a schematic view of application of an image display module according to the present invention;

FIG. 6 is a schematic view of application of an information display module according to the present invention;

FIG. 7 is the third block diagram of the digital lifetime record and display system of the present invention; and

FIG. 8 is a schematic view of an analyzing chart of the present invention.

### DETAILED DESCRIPTION OF THE INVENTION

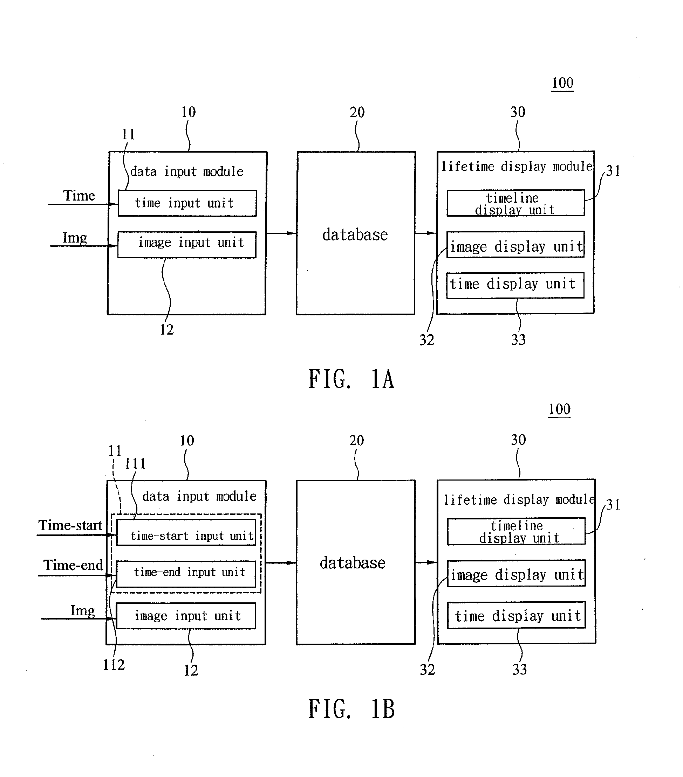

Referring to FIG. 1A, which is the first block diagram of a digital lifetime record and display system 100 of the present invention, the digital lifetime record and display system 100 comprises a data input module 10, a database 20, and a lifetime display module 30.

Referring to FIG. 1A again, the data input module 10 comprises at least a time input unit 11 and an image input unit 12.

The time input unit 11 is configured for inputting at least a time related datum Time, so as to input and record the time at which an event occurs. Referring to FIG. 1B, the time input unit 11 further comprises a time-start input unit 111 and a time-end input unit 112 for inputting a time related datum Time_start regarding the start of an event and a time related datum Time_end regarding the end of the event, respectively.

Referring to FIG. 1A and FIG. 1B again, the image input unit 12 is configured for inputting at least an image related datum Img included in an event. The image related datum Img is a photo or a video. The image related datum Img corresponds to the time related datum Time from the time input unit 11; in other words, the time related datum Time indicates the time at which the image related datum Img occurs.

Taking the image related datum Img (a photo or a video) with a digital camera concurrently stores the time related datum Time in the digital camera. Hence, the data input module 10 enables the time related datum Time and the image related datum Img corresponding to the time related datum Time to be inputted from the digital camera.

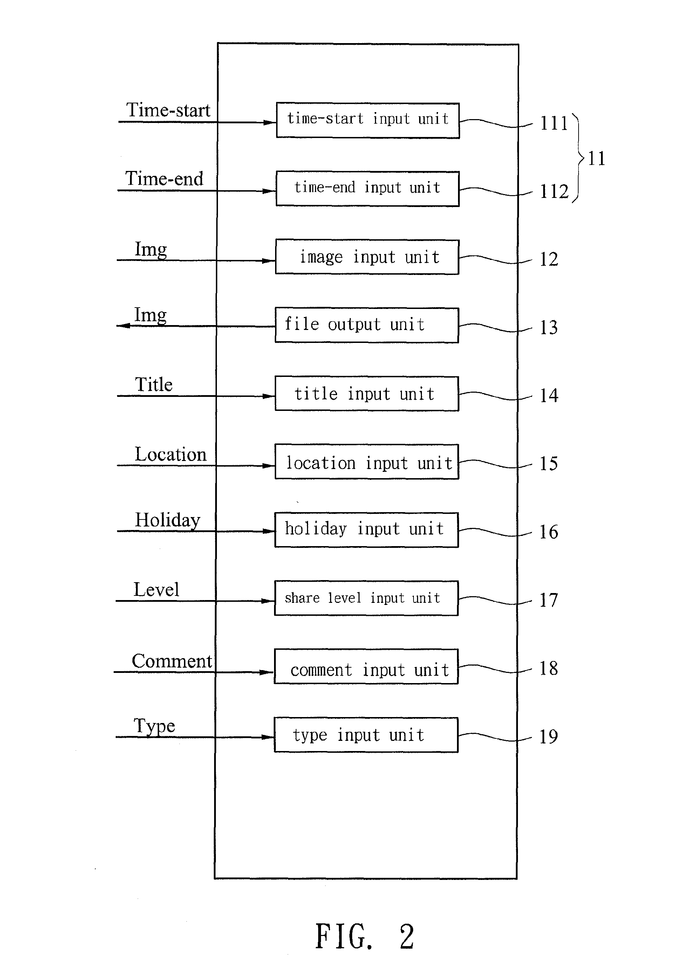

Referring to FIG. 2, the data input module 10 further comprises a file output unit 13, a title input unit 14, a location input unit 15, a holiday input unit 16, a share level input unit 17, a comment input unit 18, and a type input unit 19.

With the input units of the data input module 10, a user keeps a detailed record of data related to an event that occurs in the user's lifetime, such as a travel diary, a title of a memorial day, or a location where the user's birthday is celebrated, so as to facilitate future enquiries and recollection. The file output unit 13 outputs the image related datum Img.

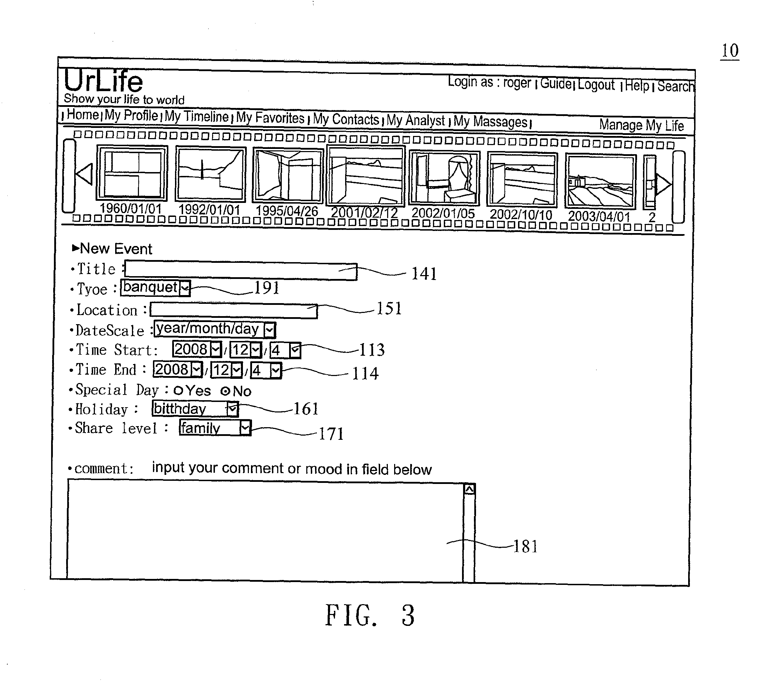

For instance, the data input module 10 appears in the form of a screen shown in FIG. 3, allowing the user to enter a time-start related datum Time_start and a time-end related datum Time_end of an event into a time-start field 113 and a time-end field 114, respectively, such that the time-start related datum Time_start and the time-end related datum Time_end can be inputted to the time-start input unit 111 and the time-end input unit 112, respectively, as shown in FIG. 2.

A title related datum Title of an event and a location related datum Location of an event can be entered into a title field 141 and a location field 151, respectively, such that the title related datum Title and the location related datum Location can be inputted to the title input unit 14 and the location input unit 15, respectively, as shown in FIG. 2.

Events recorded by the data input module 10 may include holidays, birthdays, anniversaries, and memorial days. Hence, the data input module 10 has a holiday field 161 corresponding to the holiday unit 16 such that the user can enter a holiday related datum Holiday into the holiday field 161 as shown in FIG. 2.

Referring to FIG. 3, the holiday related datum Holiday appears in the form of a menu such that the holiday related datum Holiday can be selected from the menu and inputted. The user enters a comment related datum Comment into a comment field 181 such that the comment related datum Comment can be inputted to the comment input unit 18 as shown in FIG. 2.

Referring to FIG. 3 again, the user enters a share level related datum Level into a share level field 171 in accordance with properties of an event. For instance, the user divides viewers into several groups, namely family, friends, colleagues, etc., displays the groups in the form of a menu using the share level field 171, and enters the share level related datum Level into the share level field 171 such that the share level related datum Level can be inputted to the share level unit 17 as shown in FIG. 2.

The user shares the image related datum Img in a group according to the share level related datum Level. For example, the image related datum Img shared among users in the group of friends is jointly edited and transmitted by the users in the group of friends (as described below).

Referring to FIG. 3 again, the user enters a type related datum Type into a type field 191, and the type field 191 comes in various type options presented in a menu, such as a banquet, school, travel, life, etc., allowing the user to select the type related datum Type of an event such that the type related datum Type can be inputted to the type input unit 19 as shown in FIG. 2.

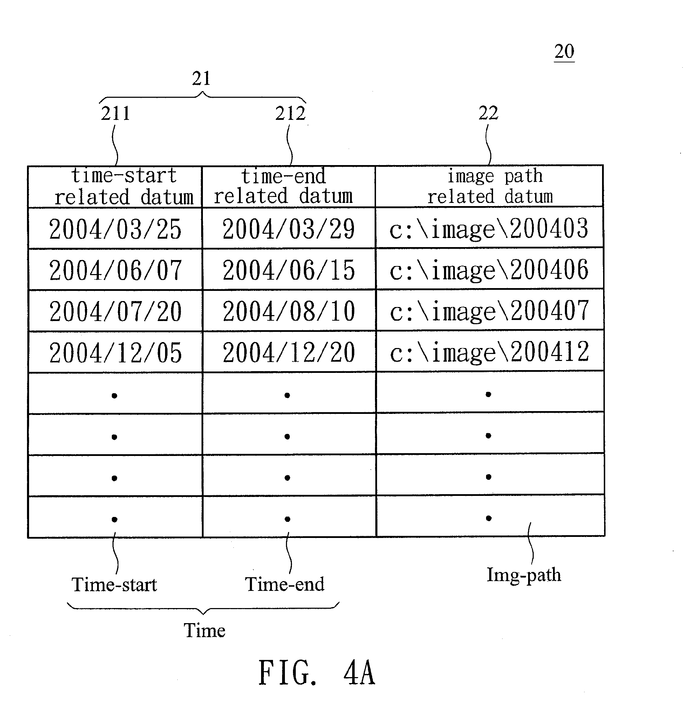

Referring to FIG. 4A, the database 20 comprises at least a time related datum field 21 and an image path related datum field 22.

Referring to FIG. 4A again, the time related datum Time from the time input unit 11 is stored in the time related datum field 21, and the time related datum Time comprises the time-start related datum Time_start and the time-end related datum Time_end stored in a time-start field 211 and a time-end field 212, respectively.

Referring to FIG. 4A again, the image path related datum Img_path is stored in the image path related datum field 22 and corresponds in storage position to the at least an image related datum Img, and thus the image path related datum Img_path can correspond in storage position to a data folder stored with a plurality of image related data Img. For example, the image path related datum Img_path corresponding to the time-start related datum Time_start 2004/03/25 is c:\image\200403, and is linked to the plurality of image related data Img in the data folder. Linkage of the image path related datum Img_path enables the time related datum Time to match the plurality of image related data Img.

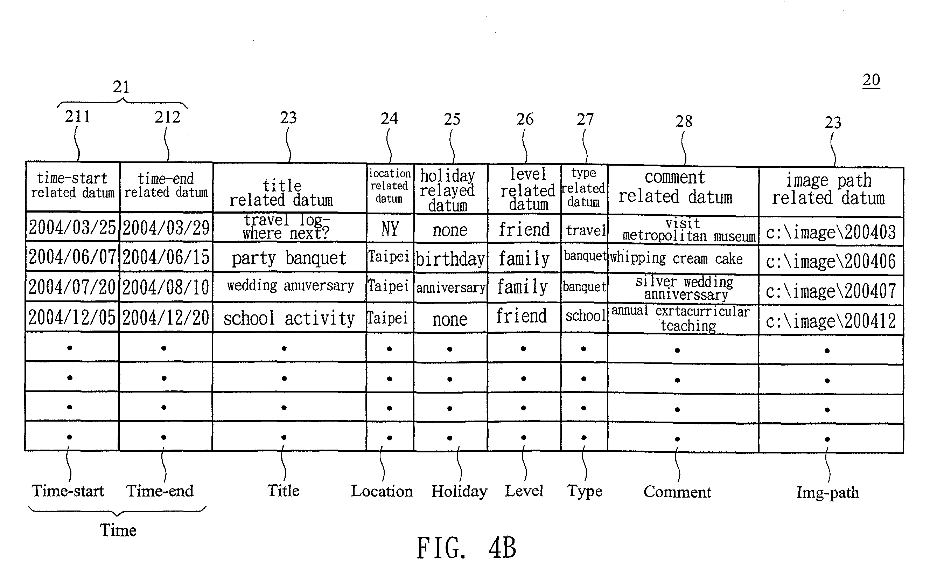

Referring to FIG. 4B, the database 20 further comprises a title related datum field 23, a location related datum field 24, a holiday related datum field 25, a share level related datum field 26, a type related datum field 27, and a comment related datum field 28, and the datum fields are stored with the title related datum Title, the location related datum Location, the holiday related datum Holiday, the share level related datum Level, the type related datum Type, and the comment related datum Comment to be inputted to the input units of the data input module 10, respectively.

The database 20 is configured to match all the data with each other regarding an event. For example, the time-start related datum Time_start 2004/06/07 matches the time-end related datum Time_end 2004/06/15 and is associated with the title related datum Title known as "birthday banquet", the location related datum Location known as "Taipei", the holiday related datum Holiday known as "birthday", the share level related datum Level known as "family", the type related datum Type known as "banquet", and the comment related datum Comment known as "whipping cream cake".

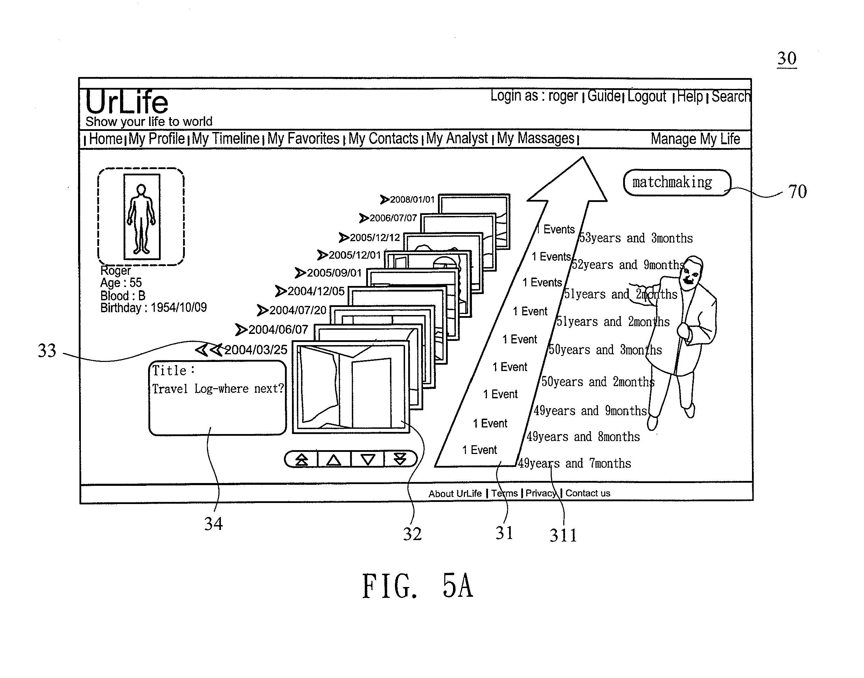

Referring to FIG. 5A, the lifetime display module 30 comprises a timeline display unit 31, at least an image display unit 32, and at least a time display unit 33. Referring to FIG. 1A and FIG. 1B again, the lifetime display module 30 is electrically signal-connected to the database 20, whereas the timeline display unit 31 and the at least an image display unit 32 display various data of the database 20 (as described below).

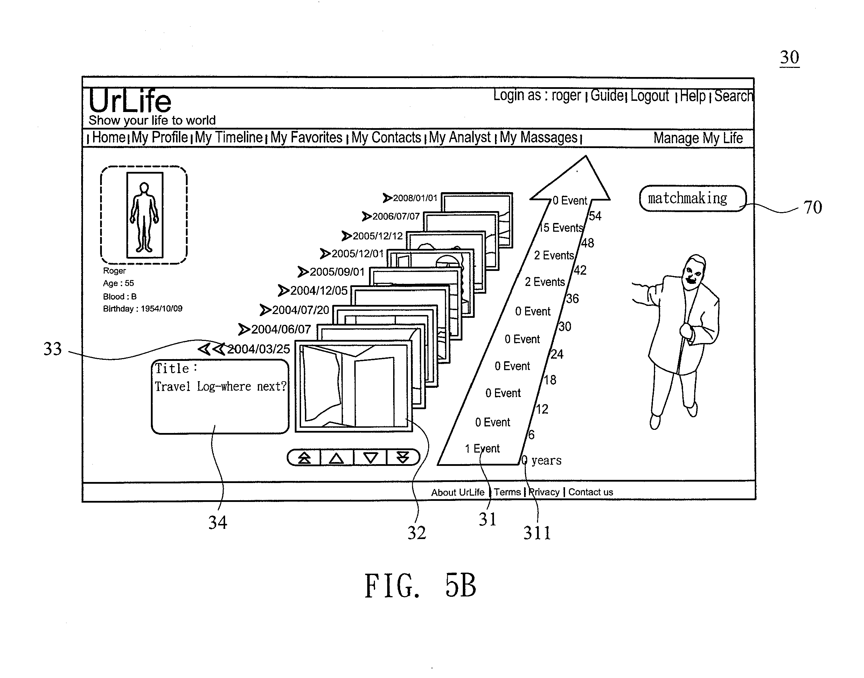

Referring to FIG. 5A again, the timeline display unit 31 comprises at least a time point 311, the at least a time point 311 is displayed in accordance with a corresponding said time related datum Time; hence, the time point 311 matches a corresponding said time related datum Time. In the situation where a plurality of time related data Time are to be processed, the timeline display unit 31 displays a plurality of said time points 311. At each of the time points 311, the user's age is displayed, such as 49 years 5 months old, 51 years 2 months old, 54 years 3 months old, etc. Referring to FIG. 5B, the time points 311 of the timeline display unit 31 are displayed equidistantly, such as 0 year old, 6 years old, 12 years old, etc.

Each of the image display units 32 matches a corresponding one of the time points 311. With the time points 311 being corresponding to their respective said time related data Time of the database 20 and the time related data Time being corresponding to their respective said image path related data Img_path, each of the image path related data Img_path is linked to a storage position of the image related datum Img, and in consequence an image related datum representative of the image related data is selected from the image related datum Img and then displayed by the image display unit 32.

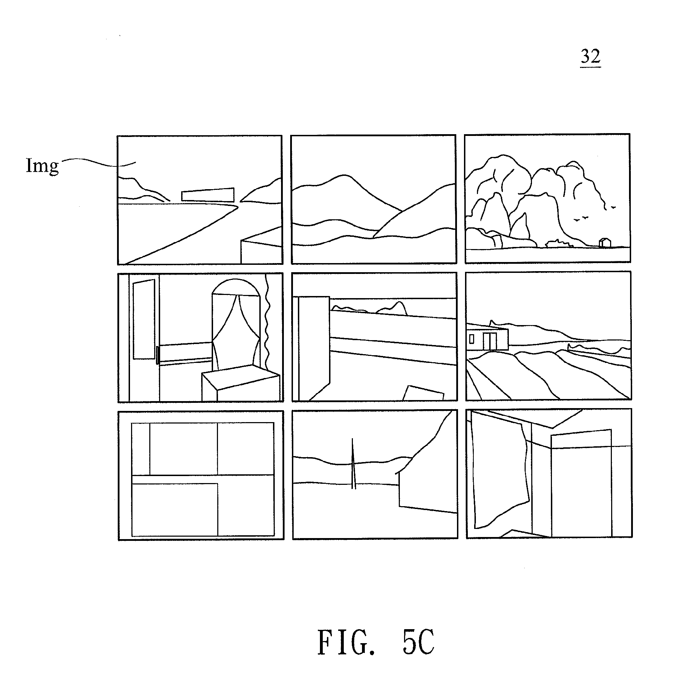

Referring to FIG. 5C, the image display unit 32 not only displays the image related datum representative of the image related data but also displays a plurality of said image related data Img. The display of the image related datum representative of the image related data helps the user to remember the contents of the image related data Img. Each of the time display units 33 matches a corresponding one of the time points 311, so as for a corresponding one of the time related data Time corresponding to the corresponding one of the time points 311 to be displayed.

Referring to FIG. 5A again, as the lifetime display module 30 can display various data of the database 20, in the situation where "49 years 5 months old" is displayed at the time point 311 of the timeline display unit 31, the time-start related datum Time_start 2004/03/25 of the database 20 is displayed by the time display unit 33 of the lifetime display module 30. To simplify the display on the screen, the image related datum (hereinafter referred to as "representative image related datum") representative of the image related data or a plurality of said image related data Img are displayed by the image display unit 32, as shown in FIG. 5C.

Referring to FIG. 5A and FIG. 5B again, the image display unit 32 further comprises a text display unit 34 for displaying the title related datum Title to be inputted to the title input unit 14, so as to enrich the display of the lifetime display module 30.

Referring to FIG. 5A through FIG. 5C, with the lifetime display module 30, the user views images and related data created in different stages of the user's lifetime according to age, and thus the user can view and recollect the process of the user's life clearly. The digital lifetime record and display system 100 displays images of events chronologically and therefore is fit for organizations and groups whose activity-related data are recorded and sorted by year. In addition, the lifetime display module 30 is easy to operate and highly interactive and therefore allures users and applies to users of all ages.

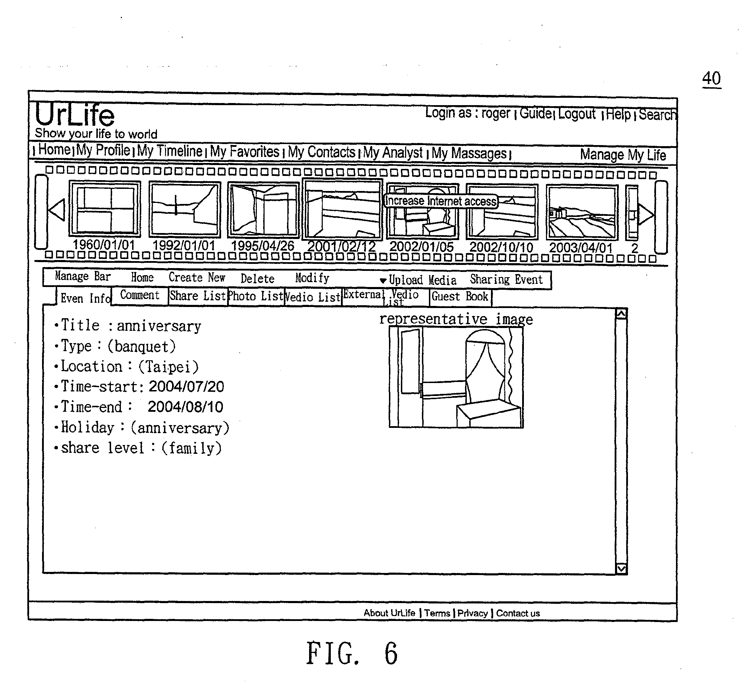

Referring to FIG. 6, the digital lifetime record and display system 100 further comprises a data display module 40 for displaying the time related datum Time, the title related datum Title, the location related datum Location, the holiday related datum Holiday, the share level related datum Level, the type related datum Type, the comment related datum Comment, and the representative image related datum of the database 20, and thus the data display module 40 helps the user remember the particulars of an event.

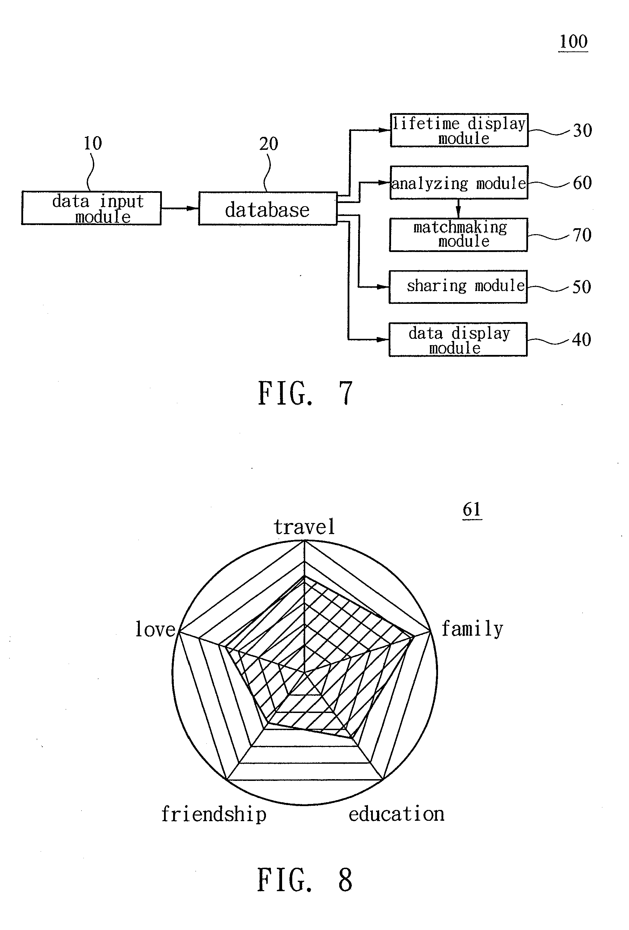

Referring to FIG. 7, the digital lifetime record and display system 100 further comprises a sharing module 50 for sharing the image related datum Img corresponding to the share level related datum Level inputted to the data input module 10. The relation between the share level related datum Level and the image related datum Img is described above.

For example, in the situation where friends go for an overseas trip together, pictures (e.g., group pictures) taken of them during the trip may be repetitious; hence, one of them can send pictures taken by her or him to the digital lifetime record and display system 100 such that the sharing module 50 sends the pictures to the digital lifetime record and display system 100 accessible to each of them according to the share level related datum Level. In so doing, each of them can edit the pictures, and all of them possess the same pictures, thereby preventing the same pictures from being inputted repeatedly, saving memory space, and preventing a waste of time for inputting copious images and bandwidth otherwise occupied by the images inputted.

Referring to FIG. 7 again, the digital lifetime record and display system 100 further comprises an analyzing module 60. The analyzing module 60 is electrically signal-connected to the database 20 and configured to perform analysis according to the type related datum Type stored in the database 20, so as to produce an analyzing chart 61 (as shown in FIG. 8) whereby the user's life preference and hobbies can be analyzed.

Referring to FIG. 8, the analyzing chart 61 produced by the analyzing module 60 is a radar chart, and the radar chart clearly displays the result of the user's analysis of the type related datum Type. Referring to FIG. 7 again, the digital lifetime record and display system 100 further comprises a matchmaking module 70 for finding a match according to the analyzing chart 61 produced by the analyzing module 60, so as to find a counterpart for the user, wherein the user and her/his counterpart have preference and hobbies in common, thereby enhancing the user's interpersonal relationships and developing the user's diverse social life.

Also, the analyzing chart 61 produced by the analyzing module 60 is conducive to marketing carried out by advertisers toward target groups; that is to say, efficacy of advertisement is enhanced by marketing or merchandise customized according to potential customers' age and preference.

The foregoing preferred embodiments are only illustrative of the features and functions of the present invention but are not intended to restrict the scope of the present invention. It is apparent to those skilled in the art that all equivalent modifications and variations made in the foregoing preferred embodiments according to the spirit and principle in the disclosure of the present invention should fall within the scope of the appended claims.

## Claims

1. A digital lifetime record and display system, comprising:
a data input module comprising at least a time input unit for inputting at least a time related datum, and an image input unit for inputting at least an image related datum corresponding to the time related datum;
a database comprising at least a time related datum field for storing the time related datum and an image path related datum field for storing the at least an image path related datum corresponding in storage position to the image related datum; and
a lifetime display module comprising a timeline display unit for displaying at least a time point in accordance with the time related datum, at least an image display unit for matching the time point and displaying a representative image related datum corresponding to the time point, and at least a time display unit for matching the time point and displaying the time related datum corresponding to the time point.

2. The digital lifetime record and display system of claim 1, wherein the data input module further comprises a file output unit for outputting the image related datum.

3. The digital lifetime record and display system of claim 1, wherein the data input module further comprises a location input unit, and the database further comprises a location field for storing a location related datum corresponding to the location field.

4. The digital lifetime record and display system of claim 1, wherein the data input module further comprises a holiday input unit, and the database further comprises a holiday field for storing a holiday related datum corresponding to the holiday field.

5. The digital lifetime record and display system of claim 1, wherein the data input module further comprises a comment input unit, and the database further comprises a comment field for storing a comment related datum corresponding to the comment field.

6. The digital lifetime record and display system of claim 1, wherein the data input module further comprises a title input unit, and the database further comprises a title field for storing a title related datum corresponding to the title field.

7. The digital lifetime record and display system of claim 6, wherein the image display unit further comprises a text display unit corresponding to and configured for displaying the title related datum.

8. The digital lifetime record and display system of claim 1, wherein the data input module further comprises a share level input unit, and the database further comprises a share level field for storing a share level related datum corresponding to the share level field.

9. The digital lifetime record and display system of claim 8, further comprising a sharing module for sharing the image related datum according to the share level related datum.

10. The digital lifetime record and display system of claim 1, wherein the data input module further comprises a type input unit, and the database further comprises a type field for storing a type related datum corresponding to the type field.

11. The digital lifetime record and display system of claim 10, further comprising an analyzing module for performing analysis according to the type related datum and producing an analyzing chart.

12. The digital lifetime record and display system of claim 11, wherein the analyzing chart is a radar chart.

13. The digital lifetime record and display system of claim 11, further comprising a matchmaking module for finding a match between users thereof according to the analyzing chart.

14. The digital lifetime record and display system of claim 1, wherein the image display unit further displays the image related data represented by the representative image related datum.

15. The digital lifetime record and display system of claim 1, wherein plural said time points are displayed as equidistant.
